# EUROPÄISCHE PATENTANMELDUNG

(11) **EP 1 705 096 A2**
(43) Veröffentlichungstag der Anmeldung: **27.09.2006**
(21) Anmeldenummer: 06005777.5
(22) Anmeldetag: 21.03.2006
(51) Int. Cl.: B62B 3/18

(54) **Einkaufswagen**

(30) Priorität: 22.03.2005 DE 102005013018
(71) Anmelder: Eberlein, Herbert, 89347 Bubesheim (DE)
(72) Erfinder: Eberlein, Herbert, 89347 Bubesheim (DE)

(57) **Zusammenfassung**

Die Erfindung betrifft einen Einkaufswagen (1) mit einer aus einer Nichtgebrauchslage in eine Gebrauchslage und wieder zurück in die Nichtgebrauchslage bewegbaren Ablage (12), die einen Abstellbereich (15) zum Abstellen von größeren Gegenständen, insbesondere von Getränkekisten (37) aufweist.

Die Erfindung zeichnet sich dadurch aus, dass an der Ablage (12) unterhalb des Abstellbereiches (15) wenigstens ein Aufnahmebereich (27) vorgesehen ist, der zur Aufnahme von kleineren Gegenständen, insbesondere von schrumpfverpackten Getränkeflaschenpackungen (38) bestimmt ist.

## Beschreibung

Die Erfindung betrifft einen Einkaufswagen mit einer aus einer Nichtgebrauchslage in eine Gebrauchslage und wieder zurück in die Nichtgebrauchslage bewegbaren Ablage, die einen Abstellbereich zum Abstellen von größeren Gegenständen, insbesondere von Getränkekisten aufweist.

Zum nächstliegenden Stand der Technik zählen Einkaufswagen, die beispielsweise in der EP 0 141 398 B 1 näher beschrieben sind. Bei allen diesen Einkaufswagen ist der Abstellbereich der Ablagen dazu bestimmt, große Getränkekisten aufzunehmen.
Inzwischen haben in SB-Geschäften schrumpfverpackte Getränkeflaschenpackungen Eingang in das Warensortiment gefunden. Die speziell zum Tragen der Getränkekisten konstruierten Ablagen eignen sich nicht zur Aufnahme besagter Getränkeflaschenpackungen. Insbesondere die Anschlagmittel, welche ein Herabstürzen der Getränkekisten verhindern, sind viel zu niedrig, um auch auf dem Abstellbereich befindliche Getränkeflaschenpackungen sicher abstützen zu können. Die Folge ist, dass Kunden die eingekauften Getränkeflaschenpackungen, die in der Regel sechs 1- oder 1,5-Literflaschen aufweisen, im Korb des Einkaufswagens abstellen, wo diese nicht nur Platz wegnehmen, sondern auch empfindliches Gut quetschen oder zerdrücken können.

Es ist Aufgabe der Erfindung, einen Einkaufswagen der hier vorliegenden Art so weiterzuentwickeln, dass wenigstens eine schrumpfverpackte Getränkeflaschenpackung sicher auf der Ablage dieses Einkaufswagens transportierbar ist.

Die Lösung der Aufgabe besteht darin, dass an der Ablage unterhalb des Abstellbereiches wenigstens ein Aufnahmebereich vorgesehen ist, der zur Aufnahme von kleineren Gegenständen, insbesondere von schrumpfverpackten Getränkeflaschenpackungen bestimmt ist.

Der entscheidende Vorteil der aufgefundenen Lösung besteht darin, dass in den Abstellbereich der Ablage, der zum Abstellen von Getränkekisten bestimmt ist, nunmehr wenigstens ein Aufnahmebereich eingearbeitet ist, der sich zur Aufnahme von mindestens einer Getränkeflaschenpackung eignet, wobei sich durch das Tieferlegen des mindestens einen Aufnahmebereiches die Höhe der Anschlagmittel zwangsläufig vergrößert, so dass eine oder mehrere Getränkeflaschenpackungen sicher abgestellt werden können. Letzteres wird insbesondere dann begünstigt, wenn der wenigstens eine Aufnahmebereich als eine von oben her zugängliche Kammer oder Vertiefung gestaltet ist, so dass eine darin befindliche Getränkeflaschenpackung nach allen vier Seiten hin begrenzt ist. Die Ablage des erfinderischen Einkaufswagens erfüllt somit, an einen doppelten Boden erinnernd, zwei Funktionen. Sie eignet sich wie bisher zum sicheren Tragen von Getränkekisten. Sie eignet sich aber auch zum sicheren Abstellen von schrumpfverpackten Getränkeflaschenpackungen.

Die Erfindung wird anhand von Ausführungsbeispielen näher erläutert. Es zeigt
- Fig. 1: einen Einkaufswagen, dessen Ablage eine Getränkekiste trägt;
- Fig. 2: den gleichen Einkaufswagen, dessen Ablage eine Wasserflaschenpackung trägt;
- Fig. 3: die in den Figuren 1 und 2 gezeigte Ablage in räumlicher Darstellung;
- Fig. 4: die in Fig. 3 dargestellte Ablage in Seitenansicht und Schnittdarstellung "A-B", siehe Fig. 3;
- Fig. 5: den in Fig. 1 und 2 beschriebenen Einkaufswagen mit in Nichtgebrauchslage befindlicher Ablage sowie
- Fig. 6: eine schubladenartige Ablage.

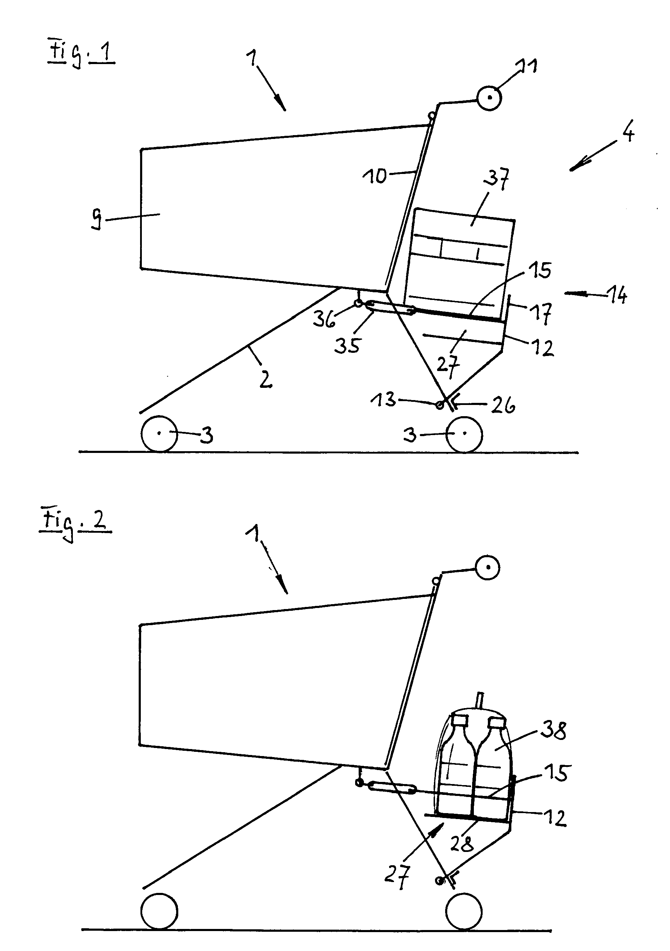

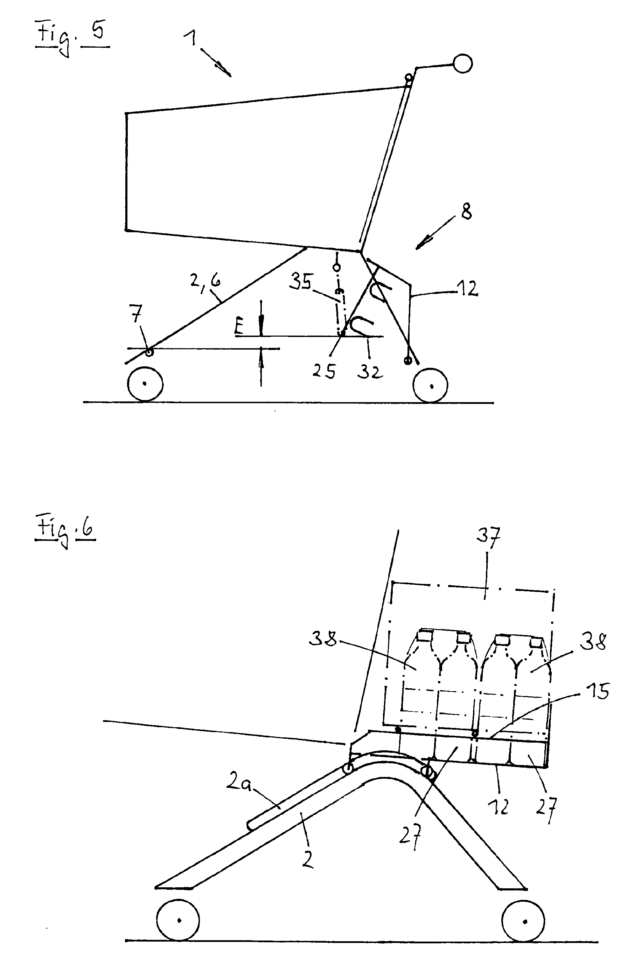

Fig. 1 zeigt in Seitenansicht einen herkömmlichen Einkaufswagen 1. Dieser ist in bekannter Weise so gestaltet, dass er sich in einen gleichen Einkaufswagen 1 platzsparend einschieben lässt. Der Einkaufswagen 1 weist ein mit Fahrrollen 3 ausgestattetes Fahrgestell 2 auf, das einen mit einer schwenkbaren Rückwand 10 ausgestatteten Korb 9 zur Aufnahme von Ware trägt. Oberhalb des Korbes 9 ist eine Schiebeeinrichtung 11 vorgesehen, mit deren Hilfe der Einkaufswagen 1 geschoben oder gezogen werden kann. Am rückwärtigen Ende 4 des Einkaufswagens 1, unterhalb der Schiebeeinrichtung 11 angeordnet und üblicherweise am Fahrgestell 2 gelagert, weist der Einkaufswagen 1 eine aus einer Nichtgebrauchslage in eine Gebrauchslage und wieder zurück in die Nichtgebrauchslage bewegbare Ablage 12 auf, siehe auch Fig. 5. Die in Gebrauchslage befindliche Ablage 12 weist einen Abstellbereich 15 zum Abstellen von größeren Gegenständen auf. Im Beispiel befindet sich auf dem Abstellbereich 15 eine Getränkekiste 37 üblicher Größe. Die Ablage 12 ist zu beiden Längsseiten des Fahrgestelles 2 um eine horizontale Achse 13 begrenzt verschwenkbar gelagert. Sie stützt sich gewöhnlich mit Auflagern 26 am Fahrgestell 2 ab und kann in dieser Position zusätzlich durch ein Sicherungsteil 35 gehalten sein, das in bekannter Weise gelenkig oder schiebebeweglich mit der Ablage 12 verbunden und am Fahrgestell 2 oder an der Unterseite des Korbes 9 befestigt ebenfalls um eine horizontale Achse 36 schwenkbar gelagert ist. Bei ausreichenden Abstützmöglichkeiten für die Ablage 12 kann aber auch auf das Sicherungsteil 35 verzichtet werden. An der Rückseite 14 der Ablage 12 befindet sich ein gewöhnlich quer zur Schieberichtung (Pfeil) des Einkaufswagens 1 sich erstreckender Anschlag 17, der höher angeordnet ist als der Abstellbereich 15 und so ein Herabstürzen der Getränkekiste 37 von der Ablage 12 verhindern hilft. Unterhalb des Abstellbereiches 15 ist wenigstens ein Aufnahmebereich 27 vorgesehen, der zur Aufnahme von kleineren Gegenständen, insbesondere von schrumpftverpackten Getränkeflaschenpackungen 38 bestimmt ist.

Fig. 2 zeigt den in Fig. 1 beschriebenen Einkaufswagen 1, dessen Ablage 12 eine aus sechs Flaschen gebildete schrumpfverpackte Getränkeflaschenpackung 38 trägt. Die Getränkeflaschenpackung 38 ist vom wenigstens einen Aufnahmebereich 27 aufgenommen. Die Getränkeflaschen erstrecken sich ausgehend vom Boden 28 des Aufnahmebereiches 27 ausgehend durch den Abstellbereich 15 der Ablage 12 hindurch nach oben.

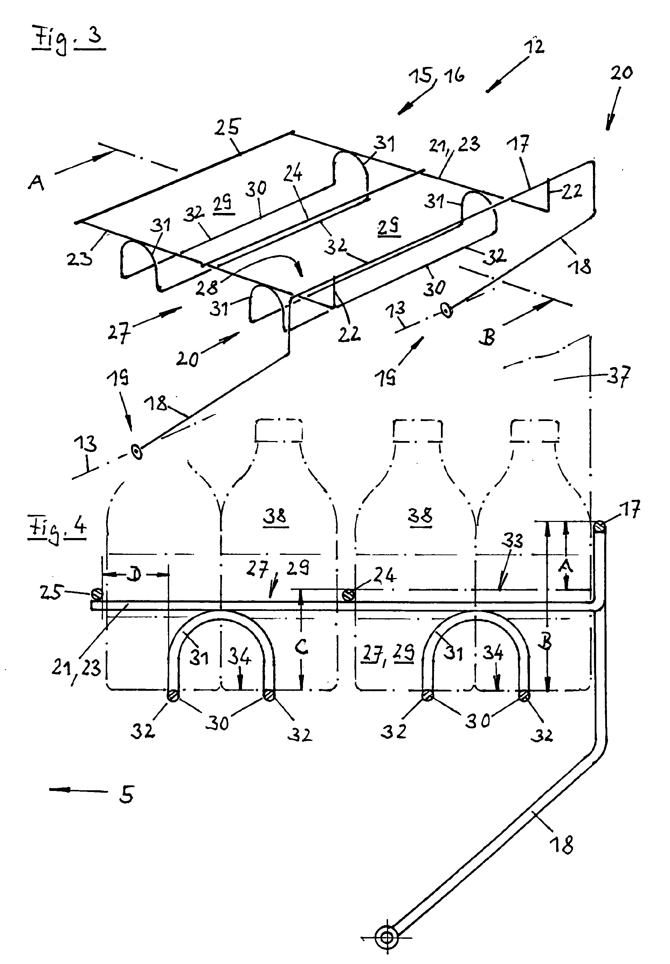

Fig. 3 zeigt ein praktisches Ausführungsbeispiel der in den Figuren 1 und 2 schematisch dargestellten und allgemein beschriebenen Ablage 12. Ausgehend von einem in der Praxis vielfach sich bewährten Ausführungsbeispiel weist die Ablage 12 zwei auf Abstand gehaltene Stützfüße 18 auf, die nach unten gerichtet sind und mit ihren unteren Enden 19 am Fahrgestell 2 des Einkaufswagens 1 um die horizontale Achse 13 schwenkbar gelagert sind. Die oberen Enden 20 der Stützfüße 18 sind durch einen quer verlaufenden Anschlag 17 verbunden. Der oben liegende Abstellbereich 15 der Ablage 12 ist durch ein U-förmig gestaltetes Rahmenstück 21 gebildet, dessen Schenkelenden 22 um 90° nach oben gebogen und am Anschlag 17 befestigt sind. Die beiden parallel angeordneten Schenkel 23 sind durch einen Quersteg 24 so verbunden, dass zwei von oben her offene Kammern 29 gebildet sind. Zu beiden Seiten des Quersteges 24 sind an den Schenkeln 23 je ein Auflager 30 befestigt. Jedes Auflager 30 besitzt zwei nach oben gerichtete, auf Abstand gehaltene bogenförmige Abschnitte 31, die mit den Schenkeln 23 ortsfest verbunden sind. Die bogenförmigen Abschnitte 31 eines jeden Auflagers 30 sind jeweils durch zwei Stababschnitte 32 verbunden, die horizontal angeordnet sind. Die Stababschnitte 32 liegen tiefer als das Rahmenstück 21 und als der Quersteg 24. Die Stababschnitte 32 bilden somit den Boden 28 der beiden Aufnahmebereiche 27 während der Quersteg 24 und die vordere Querverbindung 25 des Rahmenstückes 21 den Boden 16 des Abstellbereiches 15 bilden. Der Boden 28 des wenigstens einen Aufnahmebereiches 27 liegt somit tiefer als der Boden 16 des Abstellbereiches 15. Der wenigstens eine Aufnahmebereich 27 ist von oben her zugänglich.

Fig. 4 zeigt in einer Schnittdarstellung die in Fig. 3 beschriebene Ablage 12, siehe auch die Schnittlinie "A-B" aus Fig. 3. Die Zeichnung zeigt einen der beiden Stützfüße 18, den Anschlag 17, das am Anschlag 17 ortsfest befestigte Rahmenstück 21 mit Quersteg 24 und Querverbindung 25 sowie die beiden links und rechts des Quersteges 24 angeordneten, an den Schenkeln 23 des Rahmenstückes 21 befestigten Auflager 30 nebst bogenförmigen Abschnitten 31 und Stababschnitten 32. Die durch das Rahmenstück 21 und durch den Quersteg 24 gebildete, zum Tragen einer Getränkekiste 37 gebildete Stellfläche 33 ist höher angeordnet als die durch die Stababschnitte 32 gebildete, zum Tragen von wenigstens einer schrumpfverpackten Getränkeflaschenpackung 38 vorgesehene Stellfläche 34. Strichpunktiert angedeutet ist ein Teil einer Getränkekiste 37, die auf dem Quersteg 24 und auf der Querverbindung 25 auf- und am Anschlag 17 anliegt. Eingezeichnet ist alternativ auch eine schrumpfverpackte Getränkeflaschenpackung 38, die sich in jenem durch eine Kammer 29 gebildeten Aufnahmebereich 27 befindet, der vom Anschlag 17 und vom Quersteg 24, sowie von einem Teil der Schenkel 23 begrenzt ist. Die Getränkeflaschenpackung 38 liegt an zwei Stababschnitten 32 auf und befindet sich zwischen dem Anschlag 17 und dem Quersteg 24, die höher angeordnet sind als die Stababschnitte 32 und somit eine seitliche Stütze für die Getränkeflaschenpackung 38 bildet. Zwischen der Querverbindung 25 und dem Quersteg 24 ist eine zweite Kammer 29 angeordnet, die zusammen mit dem zweiten Auflager 30 einen zweiten Aufnahmebereich 27 zur Aufnahme einer weiteren schrumpfverpackten Getränkeflaschenpackung 38 bildet. Es können auch drei Kammern 29 und damit drei Aufnahmebereiche 27 vorgesehen sein. Aus der Zeichnung ist ersichtlich, dass für eine Getränkekiste 37 die Anschlaghöhe mit dem Maß A, für eine Getränkeflaschenpackung 38, die sich in dem dem Anschlag 17 am nächsten liegenden Aufnahmebereich 27 (oder Kammer 29) befindet, die Anschlaghöhe mit dem Maß B und für eine in der benachbarten Kammer 29 (oder Aufnahmebereich 27) abgestellte Getränkeflaschenpackung 38 die Anschlaghöhe mit dem Maß C zur Verfügung steht. Als weiteres wichtiges Merkmal ist anzumerken, dass die Querverbindung 25 der Ablage 12 näher am vorderen Ende 5 des Einkaufswagens 1 liegt als die der Querverbindung 25 am nächsten liegenden Stababschnitte 32. Das Maß D verdeutlicht den dabei gebildeten Abstand zwischen der Querverbindung 25 und den genannten Stababschnitten 32.

Letzteres ist wichtig, wenn man den in Fig. 5 dargestellten Einkaufswagen 1 betrachtet, der jenen in Fig. 1 und 2 beschriebenen Ausführungsbeispielen entspricht. Die Ablage 12 des dargestellten Einkaufswagens 1 befindet sich in der Nichtgebrauchslage. Ein mögliches Sicherungsteil 35 ist angedeutet. Bei Fahrgestellen 2 der hier gezeigten Art sind in bekannter Weise die beiden Längsträger 6 im vorderen Bereich durch ein Querstück 7 verbunden, während der hintere Bereich 8 des Fahrgestelles 2, der Stapelbarkeit wegen, in bekannter Weise offen ist. Die vorderste, durch die Querverbindung 25 gebildete Begrenzung der Ablage 12 ist höher angeordnet als das Querstück 7. Dadurch dass die der Querverbindung 25 am nächsten liegenden Stababschnitte 32 um das Maß D (Fig. 4) zurückversetzt sind, befinden diese sich in Nichtgebrauchslage der Ablage 12 in etwa auf jener Höhe wie die Querverbindung 25. Das Maß E zeigt den zwischen dem Querstück 7 und der Querverbindung 25 sowie den Stababschnitten 32 nach oben sich erstreckenden Abstand. Durch die somit erzielte Anordnung ist es möglich, einen weiteren gleichen Einkaufswagen 1, in der Zeichnung von rechts nach links, in den in der Zeichnung dargestellten Einkaufswagen 1 platzsparend einzuschieben. Dabei unterfährt das Querstück 7 des einzuschiebenden Einkaufswagen 1 die Querverbindung 25 und die Stababschnitte 32 der Ablage 12 des vorausbefindlichen (dargestellten) Einkaufswagens 1.

Der Stand der Technik kennt eine Anzahl unterschiedlich gestalteter Ablagen 12. Fig. 6 zeigt eine solche bekannte Ablage 12. Ein Teil des Fahrgestelles 2, an welchem die quasi als Schublade gestaltete Ablage 12 in Führungen 2a schiebebeweglich geführt ist, ist dargestellt. Die Ablage 12 lässt sich, in den Führungen 2a gelagert und in bekannter Weise nach hinten abgestützt, aus einer Nichtgebrauchslage in die gezeigte Gebrauchslage und wieder zurück bewegen. Wie bereits in den Ausführungsbeispielen Fig. 1 bis 5 beschrieben, besitzt die hier gezeigte Ablage 12 ebenfalls einen oben liegenden Abstellbereich 15 zum Tragen von Getränkekisten 37 und wenigstens einen darunterliegenden Aufnahmebereich 27 zur Aufnahme von wenigstens einer schrumpfverpackten Getränkeflaschenpackung 38.

Die erfinderische Idee ist auch bei Ablagen 12 verwirklichbar, die in bekannter Weise mit ihrer Vorderseite in am Fahrgestell 2 des Einkaufswagens 1 befindlichen Führungen 2a oder Abstützungen schiebebeweglich geführt und mit ihrer Rückseite mit Hilfe von Stützfüßen 18 (siehe Fig. 3 und 4) am Fahrgestell 2 um eine horizontale Achse 13 gelagert sind.

Anzumerken bleibt schließlich, dass bei allen hier beschriebenen Ausführungsbeispielen die Auflager 30 und der Quersteg 24 auch um 90° gedreht an der Ablage 12, damit also am Anschlag 17 und an der Querverbindung 25 befestigt, angeordnet sein können, so dass die Kammern 29, und damit die Aufnahmebereiche 27 ebenfalls eine um 90° gedrehte Lage einnehmen. Jede Kammer 29 weist üblicherweise einen rechtwinkligen Grundriss auf und ist entweder parallel zur Schieberichtung des Einkaufswagens 1 oder rechtwinklig, also quer zur Schieberichtung des Einkaufswagens 1 angeordnet. Es erweist sich als zweckmäßig, die Stellfläche 33 des Abstellbereiches 15 und die Stellfläche 34 des wenigstens einen Aufnahmebereiches 27 nach hinten, also entgegen der Schieberichtung des Einkaufswagens 1, leicht abfallend anzuordnen. Auf der Ablage 12 befindliche schrumpfverpackte Getränkeflaschenpackungen 38 nehmen dadurch eine noch stabilere Lage ein.

## Patentansprüche

1. Einkaufswagen (1) mit einer aus einer Nichtgebrauchslage in eine Gebrauchslage und wieder zurück in die Nichtgebrauchslage bewegbaren Ablage (12), die einen Abstellbereich (15) zum Abstellen von größeren Gegenständen, insbesondere von Getrankekisten (37) aufweist, **dadurch gekennzeichnet, dass** an der Ablage (12) unterhalb des Abstellbereiches (15) wenigstens ein Aufnahmebereich (27) vorgesehen ist, der zur Aufnahme von kleineren Gegenständen, insbesondere von schrumpfverpackten Getränkeflaschenpackungen (38) bestimmt ist.

2. Einkaufswagen nach Anspruch 1, **dadurch gekennzeichnet, dass** der wenigstens eine Aufnahmebereich (27) als eine in den Abstellbereich (15) eingearbeitete Vertiefung gestaltet und von oben her zugänglich ist.

3. Einkaufswagen nach Anspruch 1 oder 2, **dadurch gekennzeichnet, dass** jeder Aufnahmebereich (27) durch eine nach oben offene Kammer (29) gebildet ist.

4. Einkaufswagen nach Anspruch 3, **dadurch gekennzeichnet, dass** die oder jede Kammer (29) einen rechteckigen Grundriss aufweist und dass die wenigstens eine Kammer (29) entweder parallel oder quer zur Schieberichtung des Einkaufswagens (1) angeordnet ist.

5. Einkaufswagen nach Anspruch 1, **dadurch gekennzeichnet, dass** die Ablage (12) eine vordere Querverbindung (25) aufweist, dass der Boden (28) des wenigstens einen Aufnahmebereiches (27) durch Stababschnitte (32) gebildet ist und dass die Querverbindung (25) näher am vorderen Ende (5) des Einkaufswagens (1) angeordnet ist als die Stababschnitte (32).

6. Einkaufswagen nach Anspruch 1, **dadurch gekennzeichnet, dass** der Abstellbereich (15) und der wenigstens eine Aufnahmebereich (27) nach hinten leicht abfallend angeordnet sind.
